# DEMANDE DE BREVET EUROPEEN

(11) **EP 0 944 222 A1**
(43) Date de publication de la demande: **22.09.1999**
(21) Numéro de dépôt: 99400525.4
(22) Date de dépôt: 04.03.1999
(51) Int. Cl.: H04M 1/72

(54) **Interface de connexion**

(30) Priorité: 17.03.1998 FR 9803261
(71) Demandeur: ALCATEL, 75008 Paris (FR)
(72) Inventeur: Morvan, Joel, 22560 Trebeurden (FR); Guegueniat, Steven, 22140 Berhet (FR)
(74) Mandataire: Sciaux, Edmond

(57) **Abrégé**

Pour pouvoir installer plusieurs postes (2) téléphoniques sur une même ligne (3) téléphonique et pouvoir néanmoins joindre chaque poste téléphonique, spécifiquement, on propose qu'un appelant émette un numéro supplémentaire de désignation du poste. Dans ce cas, chaque poste est muni d'un circuit (4) d'orientation et de sélection qui lui permet de savoir si ce poste est sélectionné par traitement (26) de ce numéro de désignation supplémentaire. On montre qu'en agissant ainsi, on peut résoudre plus facilement les problèmes de cohabitation sur une même ligne téléphonique physique de plusieurs installations dont les finalités et modes sont différents voire antagonistes.

## Description

La présente invention a pour objet une interface de connexion utilisable dans le domaine de la téléphonie. L'interface de l'invention a pour objet de transformer une installation, avec plusieurs postes téléphoniques raccordés à une seule ligne téléphonique, en une installation avec laquelle il est possible d'atteindre d'une manière sélective un des postes téléphoniques parmi tous les autres et d'identifier un poste à partir duquel est établi un appel.

Les installations téléphoniques courantes, notamment celles existantes chez les particuliers, comportent un certain nombre de conjoncteurs muraux, au moins deux, raccordés en parallèle les uns des autres à une même ligne téléphonique. Le principe de fonctionnement d'une telle installation est le suivant. Lorsqu'un opérateur dans une telle installation veut lancer un appel, il décroche un des combinés (microphone haut-parleur) téléphoniques, et compose sur le poste qu'il utilise, le numéro d'un abonné à atteindre. Tous les postes de l'installation étant en parallèle, lorsqu'une communication téléphonique est en cours, avec l'abonné recherché, il est possible d'organiser une conférence : les combinés des autres postes de l'installation, s'ils sont décrochés, reçoivent les signaux de l'appelant, ceux de l'appelé et peuvent permettre d'intervenir. Ainsi, ils peuvent permettre à un tiers de s'immiscer dans la conversation.

En réception d'appel, un central téléphonique sélectionne la ligne téléphonique de cette installation qui correspond à un ou plusieurs numéros appelés. Sur la ligne téléphonique sélectionnée (sur les deux fils), le central transmet alors un signal de sonnerie. Ce signal de sonnerie est reçu dans tous les postes téléphoniques de l'installation. Tous se mettent à sonner en même temps. Il est possible de débuter la conversation à partir de n'importe quel poste. Dès qu'un opérateur décroche un combiné d'un poste, le central détecte ce décrochage, cesse d'envoyer la sonnerie, et met en relation les deux interlocuteurs. Comme au moment de l'appel, il est aussi possible d'intervenir à ce moment à plusieurs sur la même ligne téléphonique à partir de cette installation.

Hormis les problèmes de consommation électrique provoqués par la mise en parallèle de plusieurs postes téléphoniques sur une même ligne téléphonique, on se rend compte qu'il n'est pas facile de faire de la sélection : il n'est pas facile de faire sonner un poste plutôt qu'un autre. Par exemple, si un des postes de l'installation est un télécopieur, l'appelant qui est désireux d'émettre une télécopie voudrait pouvoir ne faire décrocher que le télécopieur, et surtout ne pas faire sonner les autres postes. De cette façon, seul le télécopieur décrocherait. Un opérateur n'aurait même pas été alerté. Le problème est le même si au lieu d'un télécopieur, l'appelant veut se connecter avec un modem pour effectuer un transfert de données d'ordinateur à ordinateur. De même, si l'installation comprend un télécopieur ou un répondeur, on ne peut faire en sorte que seul l'équipement visé réponde à l'appel.

Actuellement, si par mégarde un opérateur décroche très rapidement la ligne, par exemple au moment de la première sonnerie, le télécopieur ou le modem ne se mettent pas en service et bien entendu, la télécopie qui devait être envoyée, ne peut pas être reçue. L'échec peut se reproduire aussi souvent que des actions maladroites ou malheureuses auront été exécutées par un opérateur de l'installation.

Pour remédier à ce type de problème, on peut prévoir que la sonnerie envoyée par le central téléphonique sera de nature différente selon que l'appelant veut atteindre un premier, un deuxième, ou un énième poste d'une installation dans laquelle ces postes sont tous connectés en parallèle à une même ligne téléphonique, chacun ayant un numéro téléphonique distinct. Cependant, ce mode de sélection prend en compte l'aptitude des opérateurs à discerner, dans la sonnerie qu'ils entendent, la destination de l'appel à un poste plutôt qu'à un autre. Par exemple, si la sonnerie est rapide, cela peut vouloir concerner un premier poste (un poste de conversation), alors que si elle est lente, cela peut vouloir concerner un deuxième poste (un télécopieur, un micro-ordinateur connecté par un modem...). Autant les opérateurs ne sont pas toujours bien capables de reconnaître dans les cadences des sonneries, le poste concerné, autant, dans un but de séduction commerciale, certains postes sont munis d'une option avec laquelle il est possible de les faire sonner d'une façon grave ou d'une autre aiguë. Il est donc possible que par fantaisie, un utilisateur d'un poste en ait changé la sonnerie et que ce changement vienne modifier la perception des sélections de sonneries et rende le système incompréhensible. En outre, une telle sélection entre un télécopieur ou un modem nécessite l'intervention d'un opérateur pour, par une action positive, faire décrocher celui de ces deux appareils qui doit être concerné. Cette intervention humaine est une contrainte gênante dans un contexte où tout devrait être automatique.

Certains terminaux sont capables d'orienter les appels vers un terminal spécifique de l'installation sur reconnaissance d'un numéro supplémentaire composé par le demandeur, mais une fois que la communication a été établie. Ceci impose donc une surnumérotation (numérotation supplémentaire après établissement de la communication), et aussi la connaissance par le demandeur de ce fonctionnement particulier de l'installation du demandé. Le document US 5 485 508 décrit une telle interface de connexion, interposée entre plusieurs terminaux téléphoniques et une ligne téléphonique commune. Il comporte un circuit d'orientation intercalé entre la ligne téléphonique et ces terminaux téléphoniques, pour détecter un signal de sélection émis au moyen du clavier multifréquence d'un terminal téléphonique appelant, un certain temps après la numérotation du numéro attribué à la ligne. Ce signal est émis sur la ligne téléphonique après l'établissement d'une communication, pour pouvoir être acheminé comme un signal vocal sur la ligne téléphonique. Après avoir reçu un signal de sonnerie, le circuit attend un signal de sélection. Lorsque le circuit détecte un signal attendu, il connecte la ligne au terminal correspondant au signal détecté.

Selon l'invention, dans le cadre d'une telle utilisation de plusieurs postes téléphoniques sur une seule ligne, on résout ce problème, sans par ailleurs engendrer des coûts de transformation importants. Le central téléphonique envoie un signal codé, préalablement aux impulsions classiques du signal de sonnerie. Dans chaque terminal téléphonique, ou dans un ou des boîtiers distincts des terminaux, un circuit de traitement de ce signal codé détermine si un terminal téléphonique est concerné par les signaux codés diffusés sur la ligne téléphonique à laquelle ce circuit est raccordé. Les postes téléphoniques modernes étant déjà munis de circuits électroniques permettant leur fonctionnement, on montrera que selon l'invention, il suffit de changer les logiciels incorporés dans ces circuits électroniques pour leur donner cette nouvelle fonctionnalité, sans avoir à ajouter de circuit matériel supplémentaire, ou alors avec un faible supplément de matériel.

L'invention a donc pour objet une interface de connexion interposée entre un poste téléphonique et une ligne téléphonique, caractérisée en ce qu'elle comporte un circuit d'orientation connecté à la ligne téléphonique et au poste téléphonique pour détecter un signal de sélection envoyé par un central téléphonique, sur la ligne téléphonique, préalablement à la sonnerie, et pour connecter le poste téléphonique à la ligne si le signal de sélection correspond à un signal attendu.

Elle a également pour objet un procédé de sollicitation sélective d'un poste téléphonique caractérisé en ce que, en réception,
- on relie ce poste téléphonique à plusieurs postes téléphoniques sur une même ligne téléphonique,
- on connecte un circuit de sélection en interface entre ce poste téléphonique et cette ligne téléphonique
- on détecte dans ce circuit de sélection un signal de sélection envoyé par un central téléphonique, sur la ligne téléphonique, préalablement à la sonnerie,
- on sélectionne, avec ce circuit de sélection, ce poste téléphonique et on le fait sonner seul.

L'invention sera mieux comprise à la lecture de la description qui suit et à l'examen des figures qui l'accompagnent. Celles-ci ne sont données qu'à titre indicatif et nullement limitatif de l'invention. Les figures montrent :
Figure 1 : la représentation schématique d'une interface de connexion selon l'invention,
Figure 2 : la représentation en détails de l'interface de la figure 1,
Figures 3 et 4 : des organigrammes d'opérations mises en oeuvre par l'interface de l'invention lors de l'émission d'un appel et lors de la réception d'un appel avec une interface de connexion de l'invention respectivement.

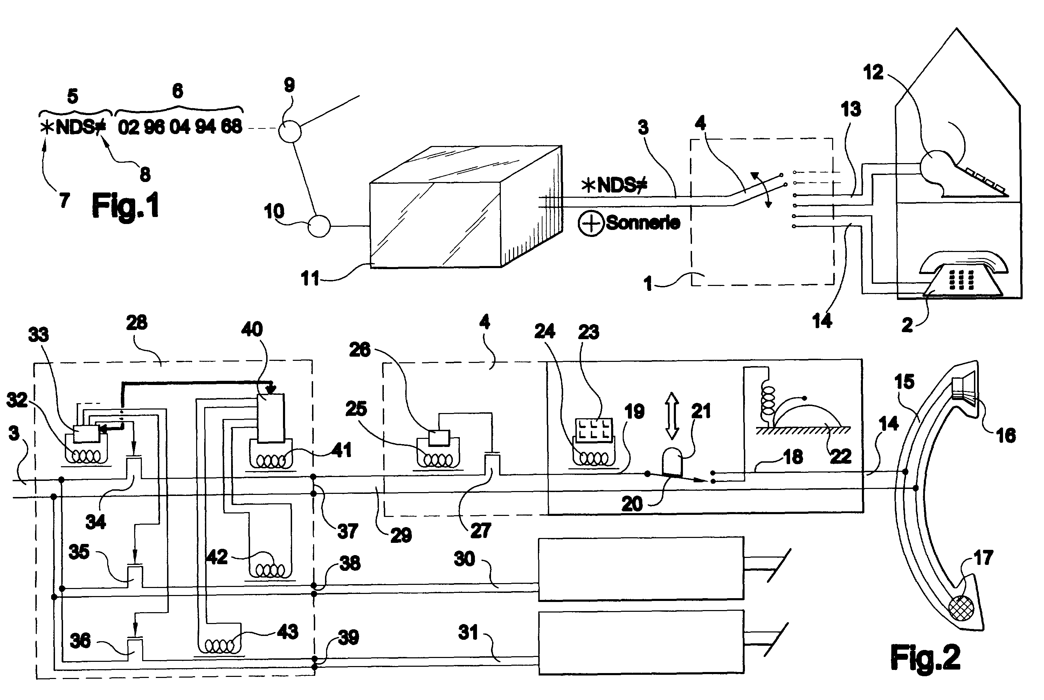

La **figure 1** montre une interface 1 de connexion selon l'invention. L'interface 1 est interposée entre un poste téléphonique 2 et une ligne téléphonique 3. L'interface 1 possède essentiellement un circuit d'orientation 4 connecté d'une part à la ligne téléphonique 3, et d'autre part à un poste téléphonique 2, à un télécopieur 12 , etc.

Il est déjà possible actuellement d'associer plusieurs numéros à une seule ligne 3 d'abonné. La ligne 3 correspond à un numéro principal dit NDI. On peut alors y associer des numéros supplémentaires dits NDS. Lorsqu'un appelant compose un numéro NDI ou NDS associé à la ligne, l'appel aboutit sur les deux fils de la ligne 3 correspondant à l'installation. Dans un exemple schématique on admettra ainsi qu'à un numéro NDI 02 96 04 94 68 est associé un numéro NDS 02 96 04 85 84, le premier étant destiné à permettre la connexion avec un poste de téléphone 2, le second avec un télécopieur 12.

Il existe déjà un service de présentation du poste appelant. Dans le cas des appels **au départ** de l'installation selon l'invention, les circuits selon l'invention vont servir à identifier un terminal à partir duquel a été lancé un appel. Cette identification permettra ensuite de distinguer le poste appelant de l'ensemble des terminaux connectés à la ligne téléphonique 3. Actuellement, dans les installations existantes, si le terminal ne s'identifie pas, l'opérateur de télécommunication publique attribue à une communication le numéro NDI de l'installation, comme numéro de poste appelant, quel que soit le poste qui appelle.

Selon l'invention, notamment pour des raisons d'élaboration de factures détaillées par exemple, l'envoi du numéro du poste appelant, NDI ou un des NDS selon le cas, est effectué par le poste qui appelle (et non pas par l'opérateur). Cet envoi permet alors de connaître la répartition des communications. En outre dans le cas où le numéro serait affiché chez l'appelé, on s'assure que l'appelé verra s'afficher correctement le numéro de l'appelant, sur son écran d'affichage, en émettant le numéro en début de numérotation.

Selon l'invention, pour s'identifier, un poste appelant à partir de l'installation selon l'invention, émettra un signal du type *AB*CDE# dans lequel :
- * est un entête et # une queue d'identifiant,
- AB est un préfixe fixé par l'opérateur de communications téléphoniques publiques pour indiquer qu'il s'agit de l'envoi d'un identificateur NDI/NDS,
- CDE est l'identificateur NDI/NDS complet (10 chiffres) ou abrégé.

Selon l'invention, l'envoi de cet identificateur sera automatique. Le poste appelant, à partir de l'installation selon l'invention, envoie son numéro sur la ligne commune.

Dans le cas des appels **arrivant** dans l'installation selon l'invention, un appelant a composé un numéro, extrait du plan de numérotation national (par exemple à dix chiffres en France) et correspondant à cette installation. Selon l'invention, le circuit d'orientation 4 reçoit à titre de signal de sélection un signal NDI ou NDS émis par le central téléphonique 10 sur la ligne téléphonique, préalablement aux impulsions classiques de sonnerie.

Par exemple, le signal de numérotation envoyé par un appelant comporte un premier groupe 5 d'informations NDS et un deuxième groupe 6 d'informations. Le premier groupe 5 d'information est contenu dans un protocole spécifique à l'invention pour les appels au départ de l'installation. Par exemple, l'information supplémentaire concernera un numéro de désignation supplémentaire, NDS, de l'appelant et ce numéro est encapsulé, dans le groupe 5 du signal, entre un entête 7 et une queue 8. Par exemple, l'entête 7 correspondra au symbole étoile *, alors que la queue 8 correspondra au symbole dièse #, disponibles sur tous les cadrans de composition de numéro des combinés téléphoniques. Selon l'invention, alors que l'émission du numéro d'appelant sera de préférence automatique, elle pourra ainsi être simulée par les postes téléphoniques qui ne seront pas munis du circuit de l'invention.

De préférence, l'entête 7 et la queue 8 seront éditées automatiquement par le poste appelant. Le groupe 6 correspond au numéro de téléphone appelé. Il est interprétable par le central téléphonique. Le groupe 5 d'information doit être composée préalablement pour ne pas être perdu en route. En effet, les centraux téléphoniques ne savent reconnaître qu'une séquence correspondant à une destination valide dans le plan de numérotation national (selon le pays concerné). Ces centraux écartent les autres numéros sans en tenir compte. Ils ne sont pas interprétés, dans la plupart des cas ils ne sont même pas transmis. Le numéro composé est ainsi transmis de proche en proche dans les centraux 9 et 10 de commutation d'un réseau téléphonique commuté. La liaison entre le poste appelant et la ligne se constitue petit à petit et aboutit dans une station terminale 11.

La station terminale 11 est celle à laquelle est reliée la ligne téléphonique physique 3 qui arrive chez l'abonné appelé et qui correspond au numéro 6. Dès que cette station 11 est sollicitée, elle émet sur la ligne téléphonique 3, les impulsions de sonnerie. Selon le type d'abonnement souscrit par l'appelé, la station terminale 11 sait si elle doit ou non envoyer l'identificateur de l'appelant aux postes reliés sur la ligne 3.

Selon l'invention, il est nécessaire bien entendu que l'appelé a souscrit à cette facilité auprès de l'opérateur du réseau public de télécommunication, comme on le fait habituellement pour bénéficier du service de présentation du numéro de l'appelant. S'il souscrit à ces deux services à la fois, on en profitera alors pour envoyer en plus l'identificateur de l'appelé, préalablement aux impulsions classiques de sonnerie. L'appelé va alors recevoir le numéro 02 96 04 94 68 ou le numéro 02 96 04 85 84 selon le destinataire, téléphone ou télécopieur, qui a été désigné par l'appelant. Cette réception va être utilisée selon l'invention pour permettre l'orientation.

Par exemple, un appelant veut effectuer un appel téléphonique vers un poste téléphonique de l'installation de l'invention. L'appelant s'identifie comme le terminal téléphonique de l'installation (le téléphone de l'appelant est supposé être associé au numéro 02 30 73 84 15: *XY* 84 15#, XY étant une chaîne fixée pour tout le réseau). Ensuite il numérote le numéro de l'appelé: par exemple 02 96 04 94 68.

Le central de rattachement de l'appelant aura reconnu cette chaîne et sait que l'appelant est le 02 30 73 84 15. La chaîne supplémentaire indicative du NDS (*XY* 84 15#) n'est pas nécessairement véhiculée dans le réseau, mais le numéro de l'appelant véhiculé dans le réseau sera 2 30 73 84 15 (car le premier chiffre, 0 ici, n'est pas transmis). Le numéro de l'appelé sera 2 96 04 94 68, de façon classique,. Ainsi, si l'appelé est abonné au service de présentation du numéro, il verra sur son poste apparaître 2 30 73 84 15 et non le numéro par défaut de l'installation, correspondant au NDI.

Selon l'invention, du fait de l'encapsulation 7 et 8, tous les centraux 9 et 10 et la station terminale 11 sont capables de reconnaître le caractère spécial des numéros NDI/NDS et de les retransmettre plus loin. La station 11 enverra, préalablement aux impulsions classiques du signal de sonnerie, l'identificateur de l'équipement visé. Celui-ci est transmis par exemple au travers d'un champ transmis par la modulation V23, tout comme on sait déjà transmette vers l'appelé le numéro de l'appelant pour le service de présentation du numéro.

Ce numéro appelé va être reçu dans le circuit 4. Le circuit 4 va interpréter le numéro appelé et va connecter le poste téléphonique qui convient à la ligne téléphonique 3. Dans l'exemple représenté, l'installation montrée comporte un télécopieur 12 connecté par une liaison 13 à interface 4 alors que le poste téléphonique 2 y est relié par une connexion 14. S'agissant d'un seul poste 2, on parle improprement d'orientation. Mais l'invention ne nécessite pas deux postes, elle fonctionne même s'il n'y en a qu'un.

Le principe de l'invention est de faire sélectionner par l'interface 4, la ligne 13 ou 14, au moins au moment de la sonnerie. Ainsi, seule une de ces lignes sera en relation avec la ligne téléphonique 3, recevra la sonnerie, et la fera diffuser par les organes correspondants du poste téléphonique raccordé. Une fois que le poste téléphonique raccordé aura été mis en service, soit manuellement par un opérateur, soit automatiquement s'il s'agit d'un télécopieur ou d'un modem, l'interface 4 pourra ensuite mettre la ligne 3 en relation avec la ligne 13 et la ligne 14, ou en variante avec une seule de ces deux là seulement. En variante, si le numéro de l'appelé véhiculé par la ligne 3 n'est pas compris, pas interprété par l'interface 4, celle-ci peut par défaut relier un seul des postes téléphoniques 2 ou 12 à la ligne 3, ou bien les relier tous, à la mode ancienne.

La **figure 2** montre une réalisation pratique de l'interface 4 et son mode de raccordement à la ligne téléphonique 3. Un combiné téléphonique classique 2 comporte un combiné 15 proprement dit, avec un haut-parleur 16 et un microphone 17. Ces deux derniers sont reliés à la ligne 14. Schématiquement, un brin 18 de la ligne 14 est relié à un brin 19 de la ligne 3 par un commutateur 20. Le commutateur 20 est actionné par un levier 21. Lorsque le combiné 15 n'est pas décroché, le levier 21 est enfoncé, et le commutateur 20 met en relation le brin 19 avec une sonnette 22. Le signal de sonnerie disponible sur la ligne 19 actionne donc le moment venu, la sonnette 22. Lorsque l'opérateur décroche le combiné 15, le levier 21 remonte, la sonnette 22 n'est plus alimentée : elle s'arrête. Dans ces conditions, le brin 19 est mis en relation avec le brin 18 : la ligne téléphonique 14 est reliée à la ligne 3. Un cadran 23 permet de composer des signaux de type DTMF pour composer un appel et joindre un abonné. Schématiquement, les signaux produits par le circuit 23 sont couplés à la ligne 19 par un coupleur 24. Tout autre système, notamment par connexion électrique, est envisageable. Le coupleur 24 n'est montré ici que pour illustrer la fonction.

La **figure 2** montre, encore accolé au poste téléphonique 2, un circuit d'orientation 4. Le circuit d'orientation 4 comporte un coupleur 25 pour recevoir un signal de sélection qui est véhiculé par la ligne 3. Ce signal de sélection est traité par un circuit 26 du circuit 4. Son traitement retentit en une commande appliquée sur un interrupteur 27 représenté ici schématiquement par un transistor monté en série dans le brin 19.

Lorsque les signaux détectés par le coupleur 25 et traités par le circuit 26 correspondent à l'identification du poste 2, le transistor 27 est rendu passant. Ceci est donc préalable à l'envoi de la sonnerie au poste 2. Dans ce cas la ligne 14 est reliée à la ligne 3. On constate que le circuit 26 peut être incorporé au circuit 23 et le coupleur 25 remplacé par le coupleur 24. Sur le plan pratique, il existe déjà dans les appareils modernes des interrupteurs placés aux endroits adéquats, de sorte qu'un interrupteur du type de l'interrupteur 27 est déjà présent. Il suffit alors simplement de programmer le circuit 23 pour y incorporer les fonctions du circuit 26. On met alors en oeuvre l'invention sans apport matériel supplémentaire. Dans ce sens le circuit 4 accolé au poste 2 y est en fait incorporé.

Plutôt que de réaliser un circuit d'orientation 4 (qui n'oriente alors que vers un seul poste téléphonique : celui auquel il est accolé), il peut être plus judicieux de réaliser un circuit d'orientation indépendant 28. Le circuit 28 permet alors de partager la ligne téléphonique 3 entre plusieurs lignes téléphoniques utilisatrices, par exemple trois lignes respectivement 29, 30 et 31. Sur les lignes 29 à 31 sont connectés des appareils téléphoniques différents, de la même façon que les appareils 2 et 12 étaient connectés sur les lignes 14 et 13 de la figure 1. Le circuit 28 comportera un coupleur 32 et un circuit de traitement 33.

Le circuit de traitement 33 est apte à reconnaître plusieurs signaux indicateurs de NDS de types différents, et d'actionner en correspondance des interrupteurs 34 à 36 de mise en relation des lignes 29 à 31 respectivement avec la ligne 3. Cette représentation est schématique, mais elle permet de voir qu'une interface selon l'invention peut comporter plusieurs ports, les ports 37 à 39 connectés chacun à un poste téléphonique différent, connectable sur commande, au travers des interrupteurs 34 à 36, avec la ligne téléphonique 3. En variante, les lignes 29 à 31 sont des lignes à émissions radioélectriques affectées de codages distincts.

A titre de perfectionnement, le circuit 28 comporte encore un circuit de détection 40 utilisable pour l'appel. Le circuit 40 est relié aux lignes 29 à 31 par des coupleurs 41 à 43. Lorsqu'un opérateur décroche un combiné 15 d'un appareil téléphonique connecté sur une de ces lignes, la ligne concernée laisse s'établir un courant pour recevoir la tonalité en provenance de la station terminale 11. Cette tonalité est détectée par un des coupleurs 41 à 43. Ce coupleur qui détecte, actionne alors le circuit 40 pour que celui-ci émette, en complément du numéro composé par l'opérateur, une indication préfixe représentative de l'identité du poste téléphonique qui appelle. De ce fait, on peut informer son interlocuteur du numéro NDS ou NDI du poste appelant dans l'installation.

Bien entendu, le circuit 40 peut être incorporé au circuit 33, et le coupleur 32 peut être incorporé aux coupleurs 41-43. En variante le circuit 28 est monté dans chaque poste téléphonique 2 : ces derniers possèdent des ports pour être reliés aux autres postes en cascade.

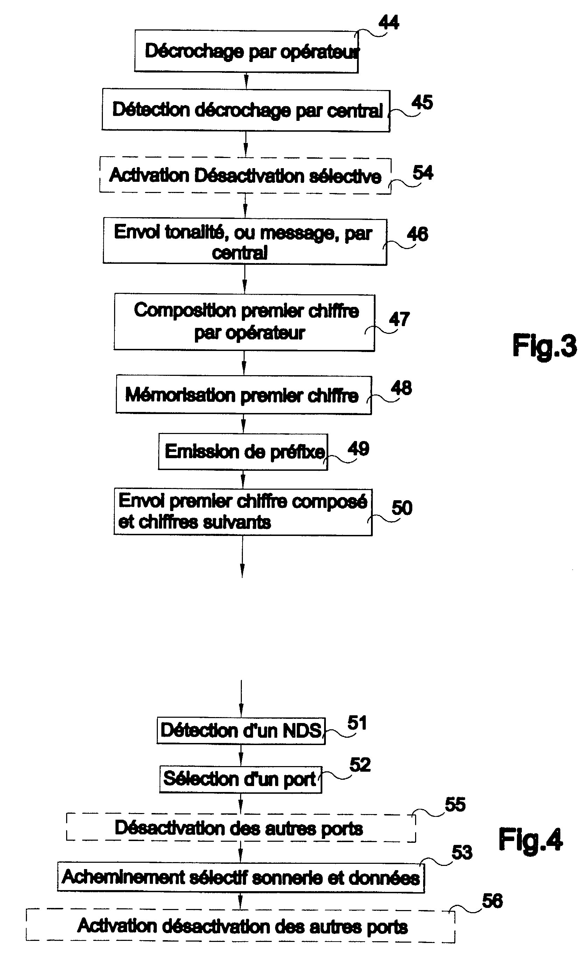

La **figure 3** montre des opérations d'appel dans l'installation selon l'invention. Dans une première opération 44, un opérateur décroche un combiné. Ce décrochage de combiné est détecté par la station terminale 11 dans une opération 45 et provoque l'envoi de la tonalité au cours d'une opération 46. Au besoin, la tonalité est remplacée par un message en provenance de la station terminale 11. Ce message peut par exemple être un message publicitaire ou une information de service. Lorsque l'opérateur compose au cours d'une opération 47 suivante, le premier chiffre du numéro qu'il veut appeler, normalement, l'envoi de la tonalité par la station terminale 11 est arrêté.

Selon l'invention, on veut envoyer automatiquement un préfixe correspondant à l'identité et à la place du poste dans l'installation qui a été à l'origine de l'appel. Si ce préfixe était envoyé immédiatement, il serait interprété par la station terminale 11 comme une composition et provoquerait automatiquement la coupure de la tonalité. Pour éviter que l'opérateur qui porte à ce moment le combiné à son oreille ait le sentiment que la ligne ne lui est pas attribuée par la station terminale 11 (puisqu'il n'entend plus la tonalité), on préfère ne pas émettre le préfixe immédiatement au décrochage. Pour que ce préfixe soit néanmoins situé en préambule du numéro composé, on a prévu au cours d'une opération 48, de mémoriser le premier chiffre du numéro appelé composé par l'appelant. Une fois que cette mémorisation est effectuée, on émet le préfixe au cours d'une opération 49, puis on émet ce premier chiffre composé ainsi que les chiffres composés suivants au cours d'une opération 50. On aurait pu simuler la tonalité que la station terminale 11 cesse d'émettre à la réception du préfixe. Cependant cette solution n'aurait pas pu satisfaire les cas où la station terminale 11 émet une annonce (éventuellement publicitaire) au lieu d'émettre la tonalité. On ne peut en effet simuler une annonce dont on ignore le contenu.

En variante, la station terminale 11 peut, après avoir reconnu que la première séquence est significative de l'identification d'un terminal, envoyer vers l'abonné l'annonce ou la tonalité comme si on reprenait l'appel au début. Dans ce cas, le circuit 4 de l'invention peut émettre la séquence d'identification dès que le décrochage est détecté.

La **figure 4** montre ce qui se passe en réception dans le circuit 4 ou le circuit 28. Au cours d'une opération 51, le circuit 26 ou 33 détecte la présence d'un numéro de désignation particulier NDI ou NDS. Au cours d'une opération 52, il sélectionne un port 37 à 39 et au cours d'une opération 53, il achemine sur ce port la sonnerie puis les données, la parole, ou autres informations.

L'invention permet par ailleurs, de gérer le reste de l'installation quand un poste téléphonique particulier a été mis en service. Ainsi, au cours d'une opération 54, pendant l'appel, ou 55 pendant la réception, on peut désactiver tous les postes qui ne sont pas concernés par la communication à établir. Par exemple, leur interrupteur 27 est sous le contrôle du circuit 33 qui peut empêcher qu'un poste non sélectionné n'intervienne sur la ligne. Dans ce cas on interdirait la conférence. Cette interdiction peut bien entendu n'être qu'une option, qu'un utilisateur pourra retenir en fonction d'une configuration choisie de son installation. Eventuellement, l'opération d'activation ou de désactivation des autres ports peut, en réception, se passer au cours d'une opération 56, après l'opération 53. Ceci sera en particulier le cas, si avec l'opération 55 on veut désactiver la sonnerie dans les postes qui ne sont pas concernés mais où, avec l'opération 56, on veut néanmoins laisser aux autres postes la possibilité de s'immiscer dans la conversation. Dans ce cas, la désactivation ou l'activation peut être temporellement limitée : limitée à l'application de la sonnerie par exemple.

## Revendications

1. Interface (4) de connexion interposée entre au moins un poste (2) téléphonique et une ligne (3) téléphonique caractérisée en ce qu'elle comporte un circuit d'orientation (4) connecté à la ligne téléphonique et au poste téléphonique pour détecter un signal de sélection (NDS) envoyé par un central téléphonique, sur la ligne téléphonique, préalablement à la sonnerie, et pour connecter le poste téléphonique à la ligne si (26) le signal de sélection correspond à un signal attendu.

2. Interface selon la revendication 1, caractérisée en ce que le circuit d'orientation comporte plusieurs ports (37-39) connectés chacun à un poste téléphonique différent et connectables sur commande (34-36) à la ligne téléphonique.

3. Procédé de sollicitation sélective d'un poste téléphonique caractérisé en ce que, en réception,
- on relie ce poste téléphonique avec plusieurs postes téléphoniques sur une même ligne téléphonique,
- on connecte un circuit de sélection en interface entre ce poste téléphonique et cette ligne téléphonique
- on détecte (51) dans ce circuit de sélection un signal de sélection envoyé par un central téléphonique, sur la ligne téléphonique, préalablement à la sonnerie,
- on sélectionne (52) avec ce circuit de sélection ce poste téléphonique et on le fait sonner seul.

4. Procédé selon la revendication 3, caractérisé en ce que, en appel,
- on compose un numéro d'appel avec un poste téléphonique d'appel,
- on mémorise (48) dans un registre d'un poste téléphonique d'appel le premier chiffre d'un numéro téléphonique composé par un opérateur,
- on émet (49), quand ce premier chiffre est mémorisé une information de désignation supplémentaire,
- puis on émet (50) le premier chiffre du numéro téléphonique composé, et tous les autres chiffres de ce numéro.

5. Procédé selon l'une des revendications 3 à 4, caractérisé en ce que
- on émet une information de désignation supplémentaire avec un poste téléphonique,
- on reçoit cette désignation supplémentaire dans une station terminale(11), et
- on fait émettre une tonalité sur la ligne par la station terminale après avoir reçu cette désignation supplémentaire.
